# FASCICULE DE BREVET EUROPEEN

(11) **EP 2 652 952 B1**
(45) Date de publication et mention de la délivrance du brevet: **29.05.2019**
(21) Numéro de dépôt: 11811074.1
(22) Date de dépôt: 09.12.2011
(51) Int. Cl.: H04N 19/105, H04N 19/50, H04N 19/176, H04N 19/60, H04N 19/593, H04N 19/11, H04N 19/182, H04N 19/192

(54) **PROCÉDÉS ET DISPOSITIFS DE CODAGE ET DE DÉCODAGE D'AU MOINS UNE IMAGE METTANT EN OEUVRE UNE SÉLECTION DE PIXELS À PRÉDIRE, PROGRAMME D'ORDINATEUR CORRESPONDANT**
METHODS AND APPARATUSES FOR ENCODING AND DECODING AT LEAST ONE IMAGE BY SELECTING PIXELS TO BE PREDICTED, AND CORRESPONDING COMPUTER PROGRAM
VERFAHREN UND VORRICHTUNGEN ZUR CODIERUNG UND DECODIERUNG MINDESTENS EINES BILDS DURCH SELEKTIERUNG ZU PREDIZIERENDER PIXELS, UND ENTSPRECHENDES COMPUTERPROGRAMM

(30) Priorité: 15.12.2010 FR 1060570
(43) Date de publication de la demande: 23.10.2013
(73) Titulaire: Orange, 75015 Paris (FR)
(72) Inventeur: JUNG, Joël, F-78320 Le Mesnil Saint Denis (FR); THIESSE, Jean-Marc, F-75015 Paris (FR); PATEUX, Stéphane, F-35700 Rennes (FR)
(74) Mandataire: Vidon Brevets & Stratégie
(86) Numéro de dépôt international: PCT/FR2011/052928
(87) Numéro de publication internationale: WO 2012/080631

(56) Documents cités:
- EP-A2- 1 610 563
- WO-A2-2009/089032
- THIOW KENG TAN; CHOONG SENG BOON; YOSHINORI SUZUKI: "Intra Prediction by Template Matching", IMAGE PROCESSING, 2006 IEEE INTERNATIONAL CONFERENCE ON, 8 octobre 2006 (2006-10-08), - 11 octobre 2006 (2006-10-11), pages 1693-1696, XP002640873, ISSN: 1522-4880 ISBN: 1-4244-0480-0
- JOHANNES BALLE ET AL: "Extended Texture Prediction for H.264/AVC Intra Coding", IMAGE PROCESSING, 2007. ICIP 2007. IEEE INTERNATIONAL CONFERENCE ON, IEEE, PI, 1 septembre 2007 (2007-09-01), pages VI-93, XP031158270, ISBN: 978-1-4244-1436-9

## Description

### 1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage image ou vidéo mis en oeuvre dans les codeurs actuels ou à venir (JPEG, MPEG, H.264, HEVC, etc et leurs amendements), et au décodage correspondant.

### 2. Art antérieur

Les images et séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission. En effet, le débit utilisable sur ce réseau est généralement limité.

On connaît déjà de nombreuses techniques de compression de données vidéo. Parmi celles-ci, la technique H.264 propose de mettre en oeuvre une prédiction de pixels d'une image courante par rapport à d'autres pixels appartenant à la même image (prédiction intra) ou à une image précédente ou suivante (prédiction inter).

Plus précisément, la prédiction intra exploite les redondances spatiales au sein d'une image. Pour ce faire, les images sont découpées en macroblocs, qui peuvent être subdivisés en blocs, constitués de pixels. Les (macro)blocs sont alors prédits à l'aide d'informations déjà reconstruites, correspondant aux (macro)blocs précédemment codés/décodés dans l'image courante selon l'ordre de parcours des (macro)blocs dans l'image. Ainsi, les informations déjà reconstruites pour un (macro)bloc en cours de codage selon un ordre de parcours classique de type « raster scan » (ligne par ligne) comprennent les pixels des lignes situées au-dessus et des colonnes situées à gauche du (macro)bloc en cours de codage.

Par ailleurs, de manière classique, le codage d'un bloc courant est réalisé à l'aide d'une prédiction du bloc courant, dit bloc prédit, et d'un résidu de prédiction ou « bloc résiduel », correspondant à une différence entre le bloc courant et le bloc prédit. Le bloc résiduel obtenu est alors transformé, par exemple en utilisant une transformée de type DCT (transformée en cosinus discrète). Les coefficients du bloc résiduel transformé sont ensuite quantifiés, puis codés par un codage entropique et transmis au décodeur, qui peut reconstruire le bloc courant en ajoutant ce bloc résiduel à la prédiction.

Le décodage est fait image par image, et pour chaque image, (macro)bloc par (macro)bloc. Pour chaque (macro)bloc, les éléments correspondants du flux sont lus. La quantification inverse et la transformation inverse des coefficients du(des) bloc(s) résiduel(s) associé(s) au (macro)bloc sont effectuées. Puis, la prédiction du (macro)bloc est calculée et le (macro)bloc est reconstruit en ajoutant la prédiction au(x) bloc(s) résiduel(s) décodé(s).

Un inconvénient de la technique de prédiction intra selon la technique H.264 est que les (macro)blocs sont classiquement prédits à partir de pixels précédemment reconstruits situés au-dessus et à gauche du (macro)bloc en cours de codage.

La prédiction des pixels du (macro)bloc courant localisés dans des zones éloignées de ces pixels précédemment reconstruits, en particulier la prédiction des pixels localisés en bas à droite du (macro)bloc courant, peut donc s'avérer difficile et coûteuse pour la transmission des résidus de prédiction.

De plus, la technique de prédiction intra selon H.264 est limitée à la prédiction de macroblocs partitionnés en blocs de taille 16x16, 8x8, ou 4x4. Or ces partitions ne sont pas toujours adaptées, notamment lorsque les blocs présentent des discontinuités complexes.

Ces schémas de prédiction intra classiques éprouvent donc des difficultés à coder des blocs présentant des discontinuités, ne pouvant être modélisées par des partitions carrées ou rectangulaires par exemple.

Afin de pallier ces inconvénients, une solution a été proposée par J. Jung et al. dans le document « Intra prediction 1D macrobloc partitionning for image and video coding », VCIP, San Jose USA, Janvier 2009.

Cette solution, encore appelée intra 1D, consiste à partitionner les blocs du macrobloc en partitions « linéaires », comme des lignes ou colonnes, droites ou brisées, puis à prédire une par une ces lignes ou colonnes. Une fois codée, une ligne ou colonne peut être utilisée pour la prédiction des lignes ou colonnes restant à coder.

De cette façon, la quantité de pixels précédemment reconstruits augmente au fur et à mesure, et la prédiction des pixels restants est de meilleure qualité, donc moins coûteuse en terme de transmission des résidus de prédiction.

Malheureusement, et comme pour la technique de prédiction intra selon H.264, les partitions linéaires proposées ne sont pas toujours adaptées au contenu des blocs.

Il existe donc un besoin pour une nouvelle technique de prédiction intra, permettant d'améliorer la qualité de prédiction, et donc la compression des données image ou vidéo.

### 3. Exposé de l'invention

L'invention propose une solution nouvelle qui ne présente pas l'ensemble de ces inconvénients de l'art antérieur, sous la forme d'un procédé de décodage d'un signal représentatif d'au moins une image.

Selon l'invention, un tel procédé met en oeuvre au moins une itération des étapes suivantes, pour au moins un bloc à décoder de l'image :
- détermination d'au moins un paramètre de sélection, à partir d'au moins une caractéristique associée à au moins un pixel de référence d'une région de référence de l'image,
   ladite région de référence comprenant au moins un bloc précédemment codé/décodé et/ou au moins un pixel prédit à une itération précédente,
- sélection d'au moins un pixel à prédire dans le bloc à décoder, à partir dudit au moins un paramètre de sélection ;
- pour au moins un pixel à prédire sélectionné, dit pixel d'ancrage, prédiction du pixel d'ancrage à partir d'au moins un pixel de référence de la région de référence, délivrant un pixel prédit.

L'invention repose ainsi sur une nouvelle approche du décodage d'images, reposant sur une sélection particulière, à chaque itération, des pixels à prédire dans un bloc à décoder.

Plus précisément, cette sélection particulière des pixels à prédire est effectuée à partir d'au moins un paramètre de sélection déterminé en tenant compte de caractéristiques de pixels d'une région de référence (localisation des pixels de référence, direction de prédiction associée à ces pixels, résidus de prédiction associés à ces pixels, etc).

On parcourt ainsi les différents pixels du bloc à décoder selon un ordre particulier, adapté au contenu du bloc, ce qui permet d'améliorer l'efficacité de la prédiction intra même en présence de discontinuités complexes.

De plus, la région de référence comprend au moins un bloc précédemment codé/décodé et/ou au moins un pixel prédit à une itération précédente. La ou les itérations comprennent ainsi une étape de mise à jour de la région de référence à partir des pixels prédits lors de l'étape de prédiction.

Le nombre de pixels précédemment prédits, et donc la taille de la région de référence augmente ainsi au fur et à mesure, et évolue donc au cours du décodage. La prédiction peut ainsi être effectuée à partir de pixels de référence plus proches des pixels à prédire, ce qui permet d'améliorer encore la qualité de la prédiction.

En particulier, le ou les paramètre(s) de sélection appartient au groupe comprenant :
- une origine de prédiction, correspondant à un pixel de la région de référence à utiliser pour la prédiction du pixel d'ancrage ;
- une direction de prédiction pour la prédiction du pixel d'ancrage ;
- une distance de prédiction pour la prédiction du pixel d'ancrage.

On note que ces paramètres de sélection peuvent être utilisés individuellement ou combinés, lors de l'étape de sélection des pixels à prédire. Par exemple, l'étape de sélection tient compte des paramètres origine de prédiction et distance et/ou direction de prédiction. On sélectionne ainsi tous les pixels à prédire localisés à une certaine distance et/ou direction de prédiction à partir de l'origine de prédiction. Selon un autre exemple, l'étape de sélection tient uniquement compte du paramètre de distance de prédiction. On sélectionne ainsi tous les pixels à prédire localisés à une certaine distance des pixels de référence.

En particulier, l'étape de détermination tient compte des positions des pixels prédits à au moins une itération précédente.

On tient ainsi compte des pixels d'ancrage sélectionnés lors des itérations précédentes pour déterminer le(s) paramètre(s) de sélection et sélectionner de nouveaux pixels à prédire.

Selon un premier mode de réalisation, l'étape de détermination détermine au moins une origine de prédiction pour la prédiction du ou des pixels d'ancrage.

L'utilisation d'un paramètre de sélection de type origine de prédiction permet d'assurer que le pixel de référence utilisé pour la prédiction du ou des pixels d'ancrage à l'itération courante est un bon prédicteur, qui donnera donc un faible résidu de prédiction.

Pour ce faire, selon un premier exemple, l'étape de détermination met en oeuvre les étapes suivantes :
- détermination d'une corrélation entre les pixels d'au moins un couple de pixels de référence ;
- sélection du ou des couples présentant une corrélation supérieure à un seuil prédéterminé ;
- extraction d'un pixel de référence de chacun des couples sélectionné, correspondant à la (ou aux) origine(s) de prédiction.

Selon un deuxième exemple, l'étape de détermination met en oeuvre les étapes suivantes :
- détermination d'un résidu de prédiction associé à au moins un pixel de référence ;
- sélection du ou desdits pixels de référence présentant un résidu de prédiction inférieur ou égal à un seuil prédéterminé, correspondant à la (ou aux) origine(s) de prédiction.

En particulier, l'étape de détermination tient également compte d'une distance entre les origines de prédiction et/ou d'une répartition des origines de prédiction dans des zones distinctes du bloc à décoder.

De cette façon, il est possible d'associer une origine de prédiction à chaque zone ou région distincte du bloc à décoder.

Selon un deuxième mode de réalisation, l'étape de détermination détermine au moins une direction de prédiction pour la prédiction du ou des pixels d'ancrage en tenant compte d'une origine de prédiction pour la prédiction du ou desdits pixels d'ancrage.

L'utilisation d'un paramètre de sélection de type direction de prédiction permet d'assurer une bonne prédiction dans le sens du motif ou des contours, ce qui permet d'utiliser des pixels de référence pertinents pour la prédiction du ou des pixels d'ancrage à l'itération courante.

Pour ce faire, selon un premier exemple, l'étape de détermination met en oeuvre les étapes suivantes :
- détermination d'une corrélation entre les pixels d'au moins un couple de pixels de référence, un couple comprenant l'origine de prédiction pour la prédiction du ou desdits pixels d'ancrage et un pixel de référence voisin de l'origine de prédiction ;
- sélection du couple présentant une corrélation supérieure à un seuil prédéterminé ;
- détermination de la direction de prédiction associée audit couple sélectionné.

Selon un deuxième exemple, l'étape de détermination tient compte de la direction de l'origine de prédiction :
- si une origine de prédiction pour la prédiction du ou desdits pixels d'ancrage appartient à un bloc précédemment codé/décodé, on affecte à ladite direction de prédiction la direction du mode de prédiction utilisé pour prédire le bloc précédemment codé/décodé ;
- si une origine de prédiction pour la prédiction du ou des pixels d'ancrage est un pixel prédit à une itération précédente, on affecte à la direction de prédiction la direction utilisée pour sélectionner le pixel prédit à l'itération précédente ;

Selon un troisième exemple, l'étape de détermination tient compte de la position de l'origine de prédiction. Ainsi, lorsque le bloc à décoder comprend au moins deux zones distinctes, l'étape de détermination détermine au moins une direction de prédiction en fonction de la zone à laquelle appartient l'origine de prédiction pour la prédiction du ou des pixels d'ancrage.

Selon un troisième mode de réalisation, l'étape de détermination détermine au moins une distance de prédiction pour la prédiction du ou des pixels d'ancrage.

L'utilisation d'un paramètre de sélection de type distance de prédiction permet de répartir efficacement les pixels d'ancrage au sein du bloc à décoder afin de faciliter la prédiction, notamment au cours des itérations suivantes.

Pour ce faire, selon un premier exemple, l'étape de détermination détermine au moins une distance de prédiction à partir d'une origine de prédiction et/ou d'une direction de prédiction, en fonction d'au moins un résidu de prédiction associé à au moins un pixel prédit à une itération précédente à partir de l'origine de prédiction et/ou de la direction de prédiction.

Selon un deuxième exemple, l'étape de détermination détermine au moins une distance de prédiction à partir d'une origine de prédiction, en fonction d'un résidu de prédiction associé à l'origine de prédiction.

Selon un autre aspect de l'invention, l'étape de sélection met en oeuvre les sous-étapes suivantes :
- présélection d'au moins un pixel à prédire dans le bloc à décoder, à partir du ou des paramètres de sélection ;
- affectation d'un poids aux pixels à prédire présélectionnés, tenant compte du ou des paramètres de sélection utilisés lors de la présélection ;
- sélection des pixels à prédire présélectionnés présentant un poids supérieur à un seuil prédéterminé.

De cette façon, il est possible de sélectionner comme pixels d'ancrage uniquement les pixels à prédire présentant un poids élevé, ces pixels étant considérés comme les plus faciles à prédire à l'itération courante et comme les meilleurs prédicteurs pour les itérations suivantes.

Dans un autre mode de réalisation, l'invention concerne un dispositif de décodage d'un signal représentatif d'au moins une image.

Selon l'invention, un tel dispositif comprend les moyens suivants, activés sous la forme d'au moins une itération pour au moins un bloc à décoder de l'image :
- des moyens de détermination d'au moins un paramètre de sélection, à partir d'au moins une caractéristique associée à au moins un pixel de référence d'une région de référence de l'image,
   ladite région de référence comprenant au moins un bloc précédemment codé/décodé et/ou au moins un pixel prédit à une itération précédente,
- des moyens de sélection d'au moins un pixel à prédire dans le bloc à décoder, à partir dudit au moins un paramètre de sélection ;
- pour au moins un pixel à prédire sélectionné, dit pixel d'ancrage, des moyens de prédiction du pixel d'ancrage à partir d'au moins un pixel de référence de la région de référence, délivrant un pixel prédit.

Un tel dispositif de décodage est notamment adapté à mettre en oeuvre le procédé de décodage décrit précédemment. Il s'agit par exemple d'un décodeur vidéo de type MPEG, HEVC ou H.264, ou selon une future norme de compression.

Ce dispositif pourra bien sûr comporter les différentes caractéristiques relatives au procédé de décodage selon l'invention. Ainsi, les caractéristiques et avantages de ce décodeur sont les mêmes que ceux du procédé de décodage, et ne sont pas détaillés plus amplement.

Un autre aspect de l'invention concerne un procédé de codage d'au moins une image.

Selon l'invention, un tel procédé met en oeuvre au moins une itération des étapes suivantes, pour au moins un bloc à coder de l'image :
- détermination d'au moins un paramètre de sélection, à partir d'au moins une caractéristique associée à au moins un pixel de référence d'une région de référence de l'image,
   ladite région de référence comprenant au moins un bloc précédemment codé/décodé et/ou au moins un pixel prédit à une itération précédente,
- sélection d'au moins un pixel à prédire dans le bloc à coder, à partir dudit au moins un paramètre de sélection ;
- pour au moins un pixel à prédire sélectionné, dit pixel d'ancrage, prédiction du pixel d'ancrage à partir d'au moins un pixel de référence de la région de référence, délivrant un pixel prédit.

L'invention propose ainsi une nouvelle approche du codage d'images, reposant sur une sélection particulière, à chaque itération, des pixels à prédire dans un bloc à coder.

En particulier, un tel procédé améliore l'efficacité du codage intra, notamment pour les blocs difficiles à prédire. La prédiction des pixels étant de meilleure qualité, cette technique de codage est moins coûteuse en terme de transmission des résidus de prédiction.

Un tel procédé de codage est notamment adapté à coder une séquence d'images destinée à être décodée selon le procédé de décodage précédemment décrit. On effectue de cette façon des étapes de détermination, sélection et prédiction similaires à celles décrites en relation avec le procédé de décodage, de façon à parcourir les blocs à coder (au codage) et à décoder (au décodage) selon le même ordre de parcours.

Les caractéristiques et avantages de ce procédé de codage sont les mêmes que ceux décrits précédemment pour le procédé de décodage. Ils ne sont donc pas détaillés plus amplement.

Dans un autre mode de réalisation, l'invention concerne un dispositif de codage d'au moins une image.

Selon l'invention, un tel dispositif comprend les moyens suivants, activés sous la forme d'au moins une itération pour au moins un bloc à coder de l'image :
- des moyens de détermination d'au moins un paramètre de sélection, à partir d'au moins une caractéristique associée à au moins un pixel de référence d'une région de référence de l'image,
   ladite région de référence comprenant au moins un bloc précédemment codé/décodé et/ou au moins un pixel prédit à une itération précédente,
- des moyens de sélection d'au moins un pixel à prédire dans le bloc à coder à partir dudit au moins un paramètre de sélection ;
- pour au moins un pixel à prédire sélectionné, dit pixel d'ancrage, des moyens de prédiction du pixel d'ancrage à partir d'au moins un pixel de référence de la région de référence, délivrant un pixel prédit.

Un tel dispositif de codage est notamment adapté à mettre en oeuvre le procédé de codage décrit précédemment. Il s'agit par exemple d'un codeur vidéo de type MPEG, HEVC ou H.264, ou selon une future norme de compression.

Ce dispositif pourra bien sûr comporter les différentes caractéristiques relatives au procédé de codage selon l'invention. Ainsi, les caractéristiques et avantages de ce codeur sont les mêmes que ceux du procédé de codage, et ne sont pas détaillés plus amplement.

L'invention concerne encore un programme d'ordinateur comportant des instructions pour la mise en oeuvre d'un procédé de codage et/ou d'un procédé de décodage tels que décrits précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre le principe général du procédé de codage selon l'invention ;
- la figure 2 présente les principales étapes du procédé de codage selon un mode de réalisation particulier de l'invention :
- la figure 3 présente les trois types de paramètres de sélection considérés selon l'invention ;
- les figures 4A à 4C représentent un bloc à coder Bk obtenu à l'issue de différentes itérations selon un premier exemple de réalisation ;
- les figures 5A et 5B illustrent le bloc à coder Bk obtenu à l'issue de différentes itérations selon un deuxième exemple de réalisation ;
- la figure 6 illustre le principe général du procédé de décodage selon l'invention ;
- les figures 7 et 8 présentent la structure simplifiée d'un codeur et d'un décodeur selon un mode de réalisation particulier de l'invention.

### 5. Description d'un mode de réalisation de l'invention

### 5.1 Principe général

Le principe général de l'invention repose sur une prédiction itérative d'au moins un (macro)bloc à coder ou à décoder d'une image, s'appuyant sur une sélection judicieuse des pixels à prédire à chaque itération, dits pixels d'ancrage.

En particulier, ces pixels d'ancrage peuvent être utilisés pour la prédiction d'autres pixels à prédire au cours d'une itération suivante. On cherche donc à sélectionner au cours d'une itération courante des pixels à prédire qui seront de bons prédicteurs pour une itération suivante. On parcourt ainsi l'ensemble du (macro)bloc en prédisant quelques pixels (pixels d'ancrage) et transmettant le résidu de prédiction associé à une itération courante, et en utilisant ces pixels d'ancrage pour la prédiction d'autres pixels et transmission du résidu de prédiction associé à une itération suivante.

De cette façon, la région de référence, comprenant le ou les blocs précédemment codés/décodés et/ou au moins un pixel prédit à une itération précédente peut être mise à jour à chaque itération, en y ajoutant le ou les pixels prédits à l'itération courante. La prédiction des pixels effectuée à une itération suivante s'en trouve améliorée, puisque la région de référence s'est enrichie d'un ou plusieurs pixels d'ancrage.

Une telle technique améliore l'efficacité du codage intra, notamment pour les blocs difficiles à prédire par une technique de codage classique (telle que les techniques H.264 ou Intra 1D décrites en relation avec l'art antérieur), et en particulier pour les blocs contenant des zones de texture variée.

### 5.2 Fonctionnement du codeur

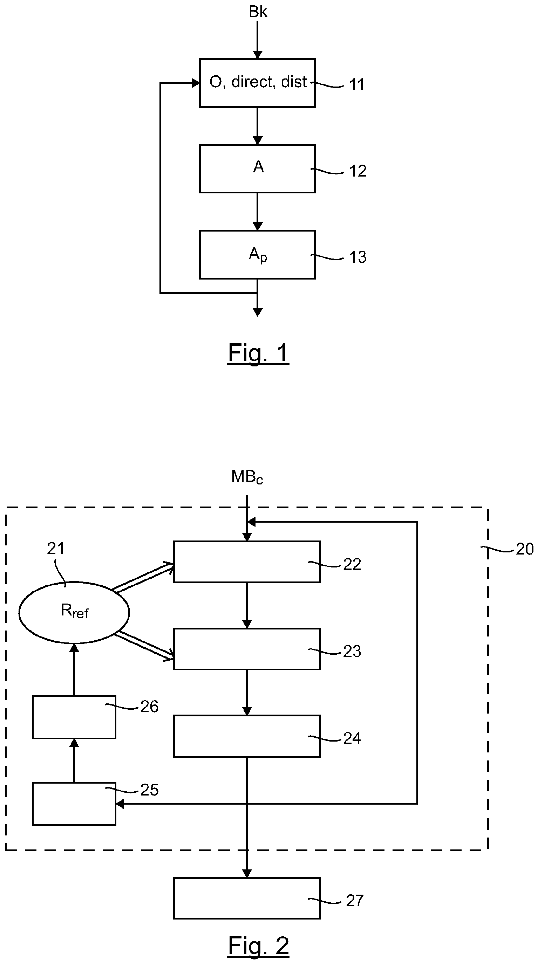

La figure 1 illustre le principe général du codage d'au moins une image selon l'invention.

Selon ce principe général, on effectue au moins une itération des étapes suivantes pour au moins un bloc à coder Bk de l'image :
- détermination 11 d'au moins un paramètre de sélection (O, direct., dist., etc), à partir d'au moins une caractéristique associée à au moins un pixel de référence d'une région de référence de l'image (par exemple de type localisation des pixels de référence, direction de prédiction associée à ces pixels, résidus de prédiction associés à ces pixels, etc),
   ladite région de référence comprenant au moins un bloc précédemment codé/décodé et/ou au moins un pixel prédit à une itération précédente,
- sélection 12 d'au moins un pixel à prédire dans le bloc à coder Bk, à partir dudit au moins un paramètre de sélection ;
- pour au moins un pixel à prédire sélectionné, dit pixel d'ancrage A, prédiction 13 du pixel d'ancrage à partir d'au moins un pixel de référence de la région de référence, délivrant un pixel prédit Ap.

Ces étapes sont itérées jusqu'à ce que chaque pixel du bloc à coder Bk soit traité.

On note que pour la première itération, la région de référence comprend uniquement des pixels appartenant à au moins un bloc précédemment codé/décodé. Pour les itérations suivantes, la région de référence comprend également les pixels d'ancrage obtenus aux itérations précédentes.

On décrit ci-après, en relation avec la figure 2, les principales étapes du codage d'au moins une image selon un mode de réalisation particulier de l'invention.

On considère selon ce mode de réalisation que l'image est divisée en macroblocs, chaque macrobloc étant lui-même divisé en blocs de pixels.

Les étapes suivantes 20 sont alors itérées tant que tous les pixels du macrobloc courant MBc ne sont pas prédits. Pour la première itération, la région de référence Rref 21 comprend uniquement des pixels précédemment codés, correspondant par exemple aux lignes situées au-dessus et aux colonnes situées à gauche du macrobloc à coder.

Au cours d'une première étape 22, le codeur détermine tout d'abord au moins un paramètre de sélection en tenant compte de caractéristiques d'au moins un pixel de la région de référence Rref 21 et de règles de sélection, comme décrit ci-après, et sélectionne *n* pixels à prédire dans le macrobloc MBc, avec n un entier supérieur ou égal à 1.

Le codeur met alors en oeuvre une prédiction 23 des *n* pixels à prédire, dits pixels d'ancrage.

Les résidus de prédiction associés à ces *n* pixels d'ancrage sont éventuellement transformés et quantifiés au cours d'une étape 24, en vue de leur transmission 27 au décodeur.

Les *n* pixels d'ancrage sont également utilisés pour mettre à jour la région de référence Rref. Plus précisément, le codeur applique une quantification inverse et une transformation inverse aux résidus de prédiction associés aux *n* pixels d'ancrage au cours d'une étape 25. Les pixels d'ancrage ainsi codés/décodés sont ajoutés à la région de référence au cours d'une étape 26. La région de référence comprend donc désormais les pixels précédemment codés, correspondant aux lignes situées au-dessus et aux colonnes situées à gauche du macrobloc à coder, et les pixels d'ancrage codés/décodés à l'itération courante.

On réitère alors les étapes 22 à 26, tant que tous les pixels du macrobloc MBc ne sont pas prédits.

### 5.3 Détermination des paramètres de sélection et sélection des pixels d'ancrage

### A) Paramètres de sélection

On présente désormais plus en détail les étapes de détermination d'un paramètre de sélection et de sélection des *n* pixels d'ancrage (étapes référencées 11, 12, 22 en figures 1 et 2).

Plus précisément, un pixel à prédire peut être sélectionné comme point d'ancrage à partir de l'un ou d'une combinaison des paramètres de sélection suivants :
- une origine de prédiction, correspondant à un pixel de la région de référence à utiliser pour la prédiction du pixel d'ancrage ;
- une direction de prédiction pour la prédiction du pixel d'ancrage ;
- une distance de prédiction pour la prédiction du pixel d'ancrage.

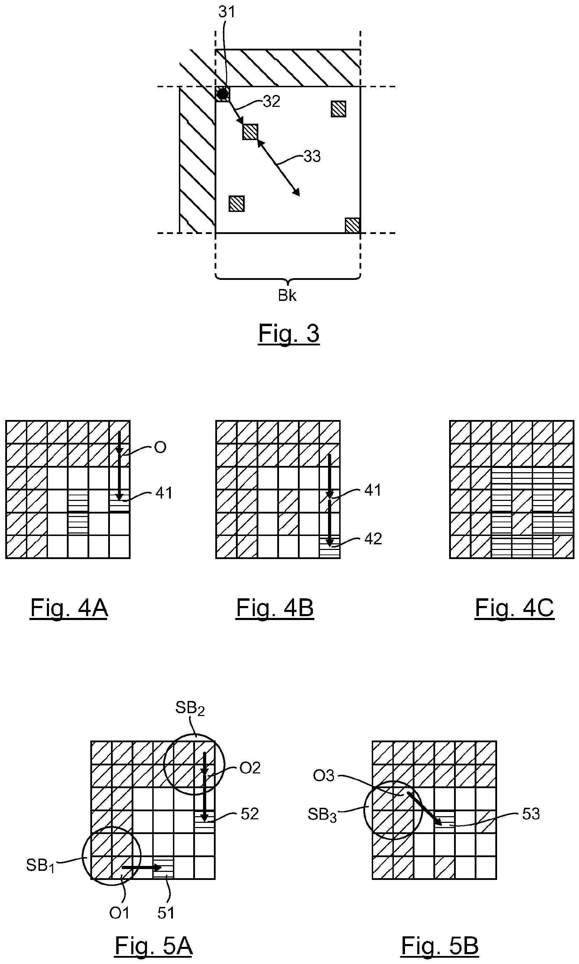

La figure 3 illustre plus précisément ces trois paramètres de sélection, pour un bloc à coder Bk. On considère par exemple que la région de référence, en hachurée sur la figure 3, est formée par les pixels précédemment codés correspondant aux lignes situées au-dessus et aux colonnes situées à gauche du bloc à coder et par cinq pixels d'ancrage sélectionnés à une itération précédente.

L'origine de prédiction 31 est représentée par un rond, et correspond à un pixel de la région de référence (hachurée) à utiliser pour la prédiction d'un pixel d'ancrage à l'itération courante.

La direction de prédiction 32 est représentée par une flèche unidirectionnelle.

La distance de prédiction 33 est représentée par une flèche bidirectionnelle.

On décrit ci-après différentes techniques pour la détermination de ces paramètres, permettant d'assurer une prédiction de bonne qualité des pixels du bloc Bk.

### B) Origine de prédiction

Plusieurs techniques peuvent être mises en oeuvre pour la détermination d'une origine de prédiction, ces techniques permettant de sélectionner des points d'ancrage différents.

Ainsi, selon un premier exemple, l'étape de détermination détermine au moins une origine de prédiction pour la prédiction d'un ou plusieurs pixels d'ancrage, à partir des étapes suivantes :
- détermination d'une corrélation entre les pixels d'au moins un couple de pixels de la région de référence ;
- sélection du ou des couples présentant une corrélation supérieure à un seuil prédéterminé ;
- extraction d'un pixel de référence de chacun des couples sélectionné, correspondant à la ou aux origine(s) de prédiction.

Selon ce premier exemple, on définit ainsi une origine de prédiction en tenant compte de la corrélation entre les pixels de sous-ensembles de pixels de la région de référence. Par exemple, on compare deux à deux les pixels de la région de référence, et on détermine pour chaque couple la différence en valeur absolue entre les deux pixels de ce couple. Le (ou les) couple(s) présentant la différence en valeur absolue la (les) plus faible(s), c'est-à-dire la (ou les) corrélation(s) la (ou les) plus élevée(s), et donc la (ou les) meilleure(s) prédiction(s), est (ou sont) choisi(s). On obtient ainsi, pour chacun de ces couples choisis, une origine de prédiction.

Selon un deuxième exemple, l'étape de détermination détermine au moins une origine de prédiction pour la prédiction d'un ou plusieurs pixels d'ancrage, à partir des étapes suivantes :
- détermination d'un résidu de prédiction associé à au moins un pixel de référence ;
- sélection du ou des pixels de référence présentant un résidu de prédiction inférieur ou égal à un seuil prédéterminé, correspondant à la ou aux origine(s) de prédiction.

Une origine de prédiction à l'itération courante est donc déterminée en étudiant les résidus de prédiction associés aux pixels de la région de référence. Ce résidu de prédiction peut avoir été déterminé à une itération précédente ou lors du codage d'un bloc voisin du bloc courant Bk.

En plus de ces deux exemples, la détermination de l'origine de prédiction peut tenir compte d'une ou plusieurs contraintes, dépendant par exemple d'une distance entre les origines de prédiction et/ou d'une répartition des origines de prédiction dans des zones distinctes du bloc Bk.

Ainsi, les origines de prédiction définies à chaque itération doivent par exemple être espacées les unes des autres de façon à assurer une distribution uniforme des pixels d'ancrage dans le bloc Bk.

Selon un autre exemple, si le macrobloc auquel appartient le bloc Bk comprend plusieurs zones délimitées par des contours, il est souhaitable d'assurer une distribution équitable des origines de prédiction dans les différentes zones. Par exemple, une origine de prédiction distincte est déterminée pour chaque zone à chaque nouvelle itération.

### C) Direction de prédiction

De la même façon, plusieurs techniques peuvent être mises en oeuvre pour la détermination d'une direction de prédiction, ces techniques permettant de sélectionner des points d'ancrage différents.

Ainsi, selon un premier exemple, l'étape de détermination détermine au moins une direction de prédiction pour la prédiction d'un ou plusieurs pixels d'ancrage, à partir des étapes suivantes :
- corrélation entre les pixels d'au moins un couple de pixels de référence, un couple comprenant une origine de prédiction pour la prédiction du ou des pixels d'ancrage et un pixel de référence voisin de l'origine de prédiction ;
- sélection du couple présentant une corrélation supérieure à un seuil prédéterminé ;
- détermination de la direction de prédiction associée au couple sélectionné.

Selon ce premier exemple, on définit ainsi une direction de prédiction en tenant compte de la corrélation entre une origine de prédiction et les pixels de référence voisins de cette origine de prédiction. Par exemple, on compare l'origine de prédiction à chaque pixel de référence (ie appartenant à la région de référence) voisin de cette origine, s'ils existent, et on détermine pour chaque couple la différence entre les deux pixels de ce couple. Le couple présentant la différence la plus faible (c'est-à-dire la corrélation la plus élevée, et donc à la meilleure prédiction) est choisi. La direction de prédiction pour la prédiction d'un ou plusieurs pixels d'ancrage correspond à la direction de prédiction associée au couple ainsi choisi.

L'étape de détermination d'une direction de prédiction peut également tenir compte d'une origine de prédiction pour la prédiction du ou des pixels d'ancrage.

Ainsi, selon un deuxième exemple, l'étape de détermination tient compte de la direction de l'origine de prédiction :
- si une origine de prédiction appartient à un bloc précédemment codé/décodé, la direction de prédiction pour le ou les pixels d'ancrage est définie par la direction du mode de prédiction (horizontale, verticale, etc) utilisé pour prédire ce bloc précédemment codé/décodé ;
- si une origine de prédiction est un pixel prédit à une itération précédente, la direction de prédiction pour le ou les pixels d'ancrage est définie par la direction utilisée pour sélectionner ce pixel prédit à l'itération précédente.

Selon un troisième exemple, l'étape de détermination tient compte de la position de l'origine de prédiction. Ainsi, si le bloc à coder comprend plusieurs zones délimitées par des contours, l'étape de détermination tient compte de la zone à laquelle appartient l'origine de prédiction pour la prédiction du ou des pixels d'ancrage. On définit ainsi une direction de prédiction telle que l'origine de prédiction et le pixel d'ancrage correspondant appartiennent à une même zone du bloc. Pour ce faire, la direction est par exemple choisie parallèle au contour.

En plus de ces trois exemples, la détermination de la direction de prédiction peut tenir compte d'une ou plusieurs contraintes, dépendant par exemple de la position des pixels d'ancrage obtenus au cours des itérations précédentes.

Par exemple, les directions qui conduisent à des pixels d'ancrage déjà prédits doivent être évitées, afin d'assurer une répartition efficace des pixels d'ancrage.

### D) Distance de prédiction

A nouveau, plusieurs techniques peuvent être mises en oeuvre pour la détermination d'une distance de prédiction.

Ainsi, selon un premier exemple, l'étape de détermination détermine au moins une distance de prédiction pour la prédiction d'un ou plusieurs pixels d'ancrage, à partir d'une origine de prédiction et/ou d'une direction de prédiction, en fonction d'au moins un résidu de prédiction associé à au moins un pixel prédit à une itération précédente à partir de l'origine de prédiction et/ou de la direction de prédiction.

En d'autres termes, la distance de prédiction peut être déterminée à partir du résultat des itérations précédentes, en tenant notamment compte de l'efficacité de la prédiction de pixels d'ancrage obtenus à une itération précédente avec une même origine de prédiction et/ou direction de prédiction. Cette efficacité ou qualité de prédiction est définie à partir des résidus de prédiction obtenus après prédiction. On adapte de cette façon l'ordre de parcours des pixels dans le bloc Bk : plus les résidus de prédiction sont faibles (c'est-à-dire que la prédiction est de bonne qualité), plus la distance de prédiction peut être élevée.

Selon un deuxième exemple, l'étape de détermination détermine au moins une distance de prédiction pour la prédiction d'un ou plusieurs pixels d'ancrage à partir d'une origine de prédiction, en fonction d'un résidu de prédiction associé à l'origine de prédiction.

En d'autres termes, la distance de prédiction peut être déterminée en tenant compte de la qualité de l'origine de prédiction : si l'origine de prédiction est de bonne qualité, c'est-à-dire qu'elle présente un résidu de prédiction faible, la distance de prédiction peut être élevée. A l'inverse, si l'origine de prédiction est de moins bonne qualité (résidu de prédiction plus élevé), une faible distance de prédiction est définie, afin de limiter les risques (la prédiction de ce nouveau pixel d'ancrage risque d'être difficile et donc coûteuse en termes de taille du résidu de prédiction).

Selon un troisième exemple, l'étape de détermination détermine au moins une distance de prédiction en tenant compte de la proximité des pixels de référence par rapport aux pixels à prédire.

En d'autres termes, on définit la distance de prédiction de façon à obtenir une répartition optimale des pixels d'ancrage dans le bloc Bk. Par exemple, la distance de prédiction est définie de façon à respecter une même distance entre tous les points d'ancrage, lors d'une itération. On obtient ainsi une « grille parfaite » à chaque itération.

### E) Sélection des pixels d'ancrage à partir des paramètres de sélection

Il est alors possible de sélectionner un ou plusieurs pixels à prédire dans le bloc Bk à partir d'un paramètre de sélection ou d'une combinaison de plusieurs paramètres de sélection (éventuellement du même type, mais déterminés selon des techniques différentes).

Par exemple, si l'on utilise uniquement le paramètre de sélection de type distance de prédiction, on peut sélectionner tous les pixels à prédire situés à une distance Dist1 des pixels de référence. Si l'on utilise uniquement le paramètre de sélection de type direction de prédiction, on peut sélectionner tous les pixels à prédire situés dans une direction Direct1 par rapport aux pixels de référence. Si l'on utilise les paramètres de sélection de type origine de prédiction et distance de prédiction, on peut sélectionner tous les pixels à prédire situés à une distance Dist2 de l'origine O. Si l'on utilise les paramètres de sélection de type origine de prédiction et direction de prédiction, on peut sélectionner tous les pixels à prédire situés dans une direction Direct2 par rapport à l'origine O.

L'utilisation d'une combinaison de paramètres de sélection permet notamment de sélectionner un nombre restreint de pixels d'ancrage pour une itération (par exemple un unique pixel d'ancrage), lorsque le nombre de pixels à prédire est trop important.

En particulier, lorsque plusieurs paramètres de sélection sont définis pour une itération, il est possible d'affecter un poids aux pixels à prédire sélectionnés à partir de ces paramètres selon la pertinence de la sélection.

Par exemple, on affecte une plus haute confiance, et donc un poids plus élevé, aux pixels obtenus à partir d'un ou plusieurs paramètres de sélection dont le critère utilisé pour la sélection est le plus pertinent, et une confiance plus faible, et donc un poids moins élevé, aux pixels obtenus à partir d'un ou plusieurs paramètres de sélection dont le critère utilisé pour la sélection est le second plus pertinent. Les pixels d'ancrage correspondent alors aux pixels à prédire de poids les plus forts.

A titre d'exemple, on considère une étape de présélection au cours de laquelle on présélectionne deux sous-ensembles de pixels à prédire :
- un premier sous-ensemble obtenu à partir d'une origine de prédiction Olet d'une direction de prédiction D1 ;
- un deuxième sous-ensemble obtenu à partir d'une origine de prédiction 02 et d'une direction de prédiction D2.

Par exemple, les origines 01 et 02 sont obtenues en déterminant une corrélation entre les pixels de référence, comme décrit précédemment. L'origine de prédiction 01 est par exemple obtenue à partir du couple présentant la corrélation la plus élevée, et l'origine de prédiction 02 à partir du couple présentant la deuxième corrélation la plus élevée.

On affecte alors un poids égal à 2 aux pixels à prédire du premier sous-ensemble (obtenu à partir de la « meilleure » origine de prédiction), et un poids égal à 1 aux pixels à prédire du deuxième sous-ensemble (obtenu à partir de la « deuxième meilleure » origine de prédiction). Les pixels à prédire appartenant aux deux sous-ensembles présentent donc un poids égal à 3.

On sélectionne alors uniquement les pixels à prédire présentant le poids le plus fort, c'est-à-dire les pixels à prédire présentant un poids égal à 3, à titre de pixels d'ancrage.

On présente désormais, en relation avec les figures 4A à 4C et 5A et 5B, le bloc Bk obtenu à l'issue de plusieurs itérations du procédé de codage selon deux exemples de mise en oeuvre de l'invention.

Sur ces figures, les hachures obliques illustrent la région de référence, et les hachures horizontales les pixels d'ancrage prédits à l'itération courante.

Plus précisément, la figure 4A illustre une première itération du procédé de codage selon un premier exemple, permettant notamment de sélectionner le pixel d'ancrage 41 à partir des trois paramètres de sélection origine, direction et distance.

Plus précisément, au cours de cette première itération, l'origine de prédiction est déterminée à partir d'une corrélation entre les pixels de référence. Elle permet de déterminer le pixel référencé O, localisé en haut à droite, comme origine de prédiction (correspondant à la plus forte corrélation entre les pixels de référence). La direction de prédiction est déterminée à partir d'une corrélation entre l'origine 0 et les pixels de référence voisins de l'origine O. La direction verticale est celle qui correspond à la plus forte corrélation entre l'origine 0 et ses pixels de référence voisins. La distance de prédiction est fixée à 2. A partir de ces trois paramètres (origine O, direction verticale et distance égale à 2), on sélectionne le pixel à prédire 41 comme pixel d'ancrage. Les pixels d'ancrage obtenus lors de cette itération sont intégrés à la région de référence pour les itérations futures.

A la seconde itération, illustrée en figure 4B, on cherche à sélectionner de nouveaux pixels à prédire, en déterminant de nouveaux paramètres de sélection.

Par exemple, le pixel d'ancrage 41 précédemment codé est déterminé comme origine de prédiction. La direction verticale est de nouveau utilisée, car elle correspond à la plus forte corrélation entre le pixel d'ancrage 41 et les pixels de référence voisins. La distance de prédiction est de nouveau fixée à 2. A partir de ces trois paramètres, on sélectionne le pixel à prédire 42 comme nouveau pixel d'ancrage. Pour les itérations futures, le pixel d'ancrage 42 est intégré à la région de référence.

Enfin, lors de la dernière itération, illustrée en figure 4C, on prédit tous les pixels à prédire restants. On constate que ces pixels restants sont tous directement voisins d'au moins un pixel de référence précédemment codé, ce qui assure l'efficacité de la prédiction.

Les figures 5A et 5B illustrent un deuxième exemple de réalisation avec détermination d'un paramètre de sélection de type direction de prédiction, à partir de la direction (horizontale, verticale, etc) du mode de prédiction utilisé pour prédire les blocs précédemment codé/décodé.

Ainsi sur la figure 5A, illustrant une première itération, deux paramètres de sélection de type origine de prédiction 01 et 02 sont tout d'abord déterminés. En effet, la fonction de corrélation entre pixels de référence selon cet exemple retourne la même valeur pour ces deux origines.

On utilise ensuite la direction des modes de prédiction associés aux blocs auxquels appartiennent ces origines de prédiction 01 et 02 pour déterminer les paramètres de sélection de type direction de prédiction. Par exemple, on considère que le sous-bloc SB1 auquel appartient l'origine de prédiction 01 a été prédit en utilisant une direction horizontale, définissant une première direction de prédiction horizontale, et que le sous-bloc SB2 auquel appartient l'origine de prédiction 02 a été prédit en utilisant une direction verticale, définissant une deuxième direction de prédiction verticale.

Finalement, on considère un paramètre de sélection de type distance de prédiction fixé à 2.

A partir des trois premiers paramètres (origine 01, direction horizontale et distance égale à 2), on sélectionne un premier pixel à prédire 51 comme pixel d'ancrage. A partir des trois autres paramètres (origine 02, direction verticale et distance égale à 2), on sélectionne un deuxième pixel à prédire 52 comme pixel d'ancrage. Les pixels d'ancrage obtenus lors de cette itération sont intégrés à la région de référence pour les itérations futures.

Au cours de la deuxième itération, illustrée en figure 5B, la fonction de corrélation entre pixels de référence permet de déterminer un seul pixel d'origine 03.

On utilise ensuite la direction du mode de prédiction associé au sous-bloc SB3 auquel appartient l'origine de prédiction 03 pour déterminer le paramètre de sélection de type direction de prédiction, correspondant ici à la direction diagonale.

Finalement, on considère à nouveau un paramètre de sélection de type distance de prédiction fixé à 2.

A partir des trois paramètres (origine 03, direction diagonale et distance égale à 2), on sélectionne un nouveau pixel à prédire 53 comme pixel d'ancrage.

Selon d'autres exemples, non illustrés, il est possible de sélectionner un nombre prédéterminé de pixels à prédire à chaque itération (par exemple *n* pixels). Il est également possible de sélectionner tous les pixels dont les paramètres de sélection sont déterminés par des fonctions retournant une valeur supérieure (ou inférieure) à un seuil prédéterminé. Par exemple, on détermine comme origine de prédiction tous les pixels de référence dont le résidu de prédiction est inférieur à un seuil prédéterminé.

Selon l'invention, l'ordre de parcours des pixels du bloc est ainsi adapté au contenu du bloc. Il est ainsi possible de prédire les pixels les plus « simples » lors des premières itérations, et les pixels les plus « complexes » (comprenant par exemple des contours) lors des dernières itérations. La région de référence étant mise à jour avec les pixels d'ancrage au fur et à mesure des itérations, la prédiction des pixels les plus complexes, mise en oeuvre lors des dernières itérations, est ainsi effectuée à partir d'une région de référence couvrant une grande partie du bloc Bk, et donc plus proche des derniers pixels à prédire. La prédiction de ces pixels est donc de meilleure qualité.

De manière classique, on transmet ensuite uniquement les résidus de prédiction au décodeur, éventuellement après transformation et quantification. La prédiction selon l'invention étant de meilleure qualité, ces résidus de prédiction sont moins coûteux. On obtient donc un gain en compression.

### 5.4 Fonctionnement du décodeur

Pour le décodage d'au moins une image codée selon le procédé de codage illustré en figures 1 et 2, le décodeur met en oeuvre des étapes similaires à celles mises en oeuvre au codage. Il re-sélectionne de cette façon des pixels d'ancrage, comme effectué au codage.

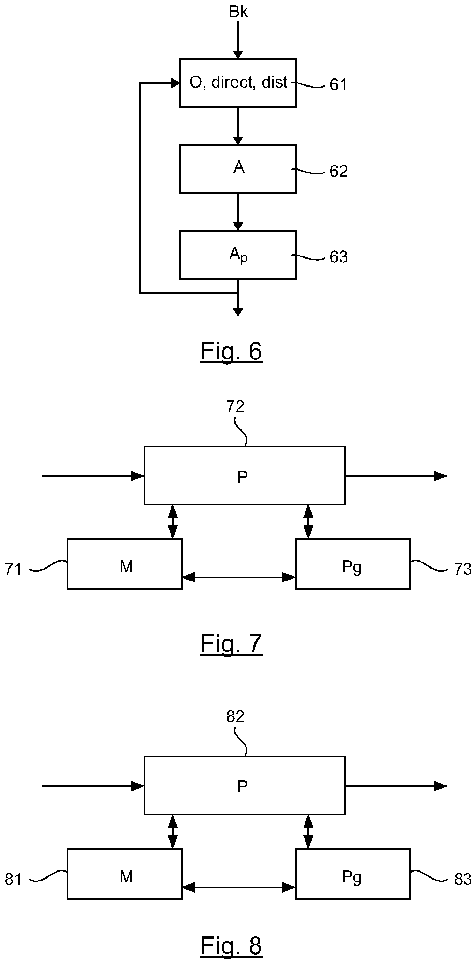

Plus précisément, comme illustré en figure 6, le décodeur effectue au moins une itération des étapes suivantes pour au moins un bloc à décoder Bk de l'image :
- détermination 61 d'au moins un paramètre de sélection (O, direct., dist., etc), à partir d'au moins une caractéristique associée à au moins un pixel de référence d'une région de référence de l'image,
   ladite région de référence comprenant au moins un bloc précédemment codé/décodé et/ou au moins un pixel prédit à une itération précédente,
- sélection 62 d'au moins un pixel à prédire dans le bloc à décoder Bk, à partir dudit au moins un paramètre de sélection ;
- pour au moins un pixel à prédire sélectionné, dit pixel d'ancrage A, prédiction 63 du pixel d'ancrage à partir dudit au moins un pixel de référence, délivrant un pixel prédit Ap.

Ces étapes sont itérées jusqu'à ce que chaque pixel du bloc à décoder Bk soit traité.

Comme pour le codage, on note que pour la première itération, la région de référence comprend uniquement des pixels appartenant à au moins un bloc précédemment codé/décodé. Pour les itérations suivantes, la région de référence comprend également les pixels d'ancrage obtenus aux itérations précédentes.

Ces étapes sont similaires à celles précédemment décrites pour le codage, et ne sont donc pas présentées ici plus en détail.

### 5.5 Structure du codeur et du décodeur

On présente finalement, en relation avec les figures 7 et 8, les structures simplifiées d'un codeur et d'un décodeur mettant respectivement en oeuvre une technique de codage et une technique de décodage selon l'un des modes de réalisation décrits ci-dessus.

Par exemple, le codeur comprend une mémoire 71 comprenant une mémoire tampon, une unité de traitement 72, équipée par exemple d'un microprocesseur µP, et pilotée par le programme d'ordinateur 73, mettant en oeuvre le procédé de codage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée au moins une image à coder. Le microprocesseur de l'unité de traitement 72 met en oeuvre les étapes du procédé de codage décrit précédemment, selon les instructions du programme d'ordinateur 73, pour coder au moins un bloc de l'image. Pour cela, le codeur comprend, outre la mémoire tampon 71, des moyens de détermination d'au moins un paramètre de sélection, des moyens de sélection d'au moins un pixel à prédire dans le bloc à coder, et des moyens de prédiction d'au moins un pixel d'ancrage. Ces moyens sont pilotés par le microprocesseur de l'unité de traitement 72.

Le décodeur comprend quant à lui une mémoire 81 comprenant d'une mémoire tampon, une unité de traitement 82, équipée par exemple d'un microprocesseur µP, et pilotée par le programme d'ordinateur 83, mettant en oeuvre le procédé de décodage selon l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée un signal représentatif d'au moins une image. Le microprocesseur de l'unité de traitement 82 met en oeuvre les étapes du procédé de décodage décrit précédemment, selon les instructions du programme d'ordinateur 83, pour décoder au moins un bloc de l'image. Pour cela, le décodeur comprend, outre la mémoire tampon 81, des moyens de détermination d'au moins un paramètre de sélection, des moyens de sélection d'au moins un pixel à prédire dans le bloc à décoder, des moyens de prédiction d'au moins un pixel d'ancrage. Ces moyens sont pilotés par le microprocesseur de l'unité de traitement 82.

## Revendications

1. Procédé de décodage d'un signal représentatif d'au moins une image,
**caractérisé en ce qu'**il met en oeuvre au moins une itération des étapes suivantes, pour au moins un bloc à décoder de ladite image :
- détermination (61) d'au moins un paramètre de sélection, à partir d'au moins une caractéristique associée à au moins un pixel de référence d'une région de référence de ladite image,
ladite région de référence comprenant au moins un bloc précédemment codé/décodé et/ou au moins un pixel prédit à une itération précédente,
- sélection (62) d'au moins un pixel à prédire dans ledit bloc à décoder, à partir dudit au moins un paramètre de sélection ;
- pour au moins un pixel à prédire sélectionné, dit pixel d'ancrage, prédiction (63) dudit pixel d'ancrage à partir d'au moins un pixel de référence de ladite région de référence, délivrant un pixel prédit.

2. Procédé de décodage selon la revendication 1, **caractérisé en ce que** ledit au moins un paramètre de sélection appartient au groupe comprenant :
- une origine de prédiction, correspondant à un pixel de ladite région de référence à utiliser pour la prédiction dudit pixel d'ancrage ;
- une direction de prédiction pour la prédiction dudit pixel d'ancrage ;
- une distance de prédiction pour la prédiction dudit pixel d'ancrage.

3. Procédé de décodage selon la revendication 1, **caractérisé en ce que** ladite étape de détermination (61) tient compte des positions des pixels prédits à au moins une itération précédente.

4. Procédé de décodage selon la revendication 1, **caractérisé en ce que** ladite étape de détermination (61) détermine au moins une origine de prédiction pour la prédiction du ou desdits pixels d'ancrage, à partir des étapes suivantes :
- détermination d'une corrélation entre les pixels d'au moins un couple de pixels de référence ;
- sélection du ou des couples présentant une corrélation supérieure à un seuil prédéterminé ;
- extraction d'un pixel de référence de chacun des couples sélectionné, correspondant à ladite au moins une origine de prédiction.

5. Procédé de décodage selon la revendication 1, **caractérisé en ce que** ladite étape de détermination (61) détermine au moins une origine de prédiction pour la prédiction du ou desdits pixels d'ancrage, à partir des étapes suivantes :
- détermination d'un résidu de prédiction associé à au moins un pixel de référence ;
- sélection du ou desdits pixels de référence présentant un résidu de prédiction inférieur ou égal à un seuil prédéterminé, correspondant à ladite au moins une origine de prédiction.

6. Procédé de décodage selon la revendication 1, **caractérisé en ce que** ladite étape de détermination (61) détermine au moins une direction de prédiction pour la prédiction du ou desdits pixels d'ancrage en tenant compte d'au moins une origine de prédiction pour la prédiction du ou desdits pixels d'ancrage.

7. Procédé de décodage selon la revendication 6, **caractérisé en ce que** ladite étape de détermination (61) met en oeuvre les étapes suivantes:
- détermination d'une corrélation entre les pixels d'au moins un couple de pixels de référence, un couple comprenant ladite origine de prédiction pour la prédiction du ou desdits pixels d'ancrage et un pixel de référence voisin de ladite origine de prédiction ;
- sélection du couple présentant une corrélation supérieure à un seuil prédéterminé ;
- détermination de la direction de prédiction associée audit couple sélectionné.

8. Procédé de décodage selon la revendication 1, **caractérisé en ce que** ladite étape de détermination (61) détermine au moins une distance de prédiction pour la prédiction du ou desdits pixels d'ancrage à partir d'au moins une origine de prédiction et/ou d'au moins une direction de prédiction, en fonction d'au moins un résidu de prédiction associé à au moins un pixel prédit à une itération précédente à partir de ladite au moins une origine de prédiction et/ou de ladite au moins une direction de prédiction.

9. Procédé de décodage selon la revendication 1, **caractérisé en ce que** ladite étape de détermination (61) détermine au moins une distance de prédiction pour la prédiction du ou desdits pixels d'ancrage à partir d'au moins une origine de prédiction, en fonction d'un résidu de prédiction associé à ladite au moins une origine de prédiction.

10. Procédé de décodage selon la revendication 1, **caractérisé en ce que** ladite étape de sélection met en oeuvre les sous-étapes suivantes :
- présélection d'au moins un pixel à prédire dans ledit bloc à décoder, à partir du ou desdits paramètres de sélection ;
- affectation d'un poids aux pixels à prédire présélectionnés, tenant compte du ou desdits paramètres de sélection utilisés lors de ladite présélection ;
- sélection des pixels à prédire présélectionnés présentant un poids supérieur à un seuil prédéterminé.

11. Procédé de décodage selon la revendication 1, **caractérisé en ce que** ladite au moins une itération comprend une étape de mise à jour de ladite région de référence à partir des pixels prédits lors de ladite étape de prédiction.

12. Procédé de codage d'au moins une image,
**caractérisé en ce qu'**il met en oeuvre au moins une itération des étapes suivantes, pour au moins un bloc à coder de ladite image :
- détermination (11) d'au moins un paramètre de sélection, à partir d'au moins une caractéristique associée à au moins un pixel de référence d'une région de référence de ladite image,
ladite région de référence comprenant au moins un bloc précédemment codé/décodé et/ou au moins un pixel prédit à une itération précédente,
- sélection (12) d'au moins un pixel à prédire dans ledit bloc à coder, à partir dudit au moins un paramètre de sélection ;
- pour au moins un pixel à prédire sélectionné, dit pixel d'ancrage, prédiction (13) dudit pixel d'ancrage à partir d'au moins un pixel de référence de ladite région de référence, délivrant un pixel prédit.

13. Dispositif de décodage d'un signal représentatif d'au moins une image,
**caractérisé en ce qu'**il comprend les moyens suivants, activés sous la forme d'au moins une itération pour au moins un bloc à décoder de ladite image :
- des moyens de détermination (61) d'au moins un paramètre de sélection, à partir d'au moins une caractéristique associée à au moins un pixel de référence d'une région de référence de ladite image,
ladite région de référence comprenant au moins un bloc précédemment codé/décodé et/ou au moins un pixel prédit à une itération précédente,
- des moyens de sélection (62) d'au moins un pixel à prédire dans ledit bloc à décoder, à partir dudit au moins un paramètre de sélection ;
- pour au moins un pixel à prédire sélectionné, dit pixel d'ancrage, des moyens de prédiction (63) dudit pixel d'ancrage à partir d'au moins un pixel de référence de ladite région de référence, délivrant un pixel prédit.

14. Dispositif de codage d'au moins une image,
**caractérisé en ce qu'**il comprend les moyens suivants, activés sous la forme d'au moins une itération pour au moins un bloc à coder de ladite image :
- des moyens de détermination (11) d'au moins un paramètre de sélection, à partir d'au moins une caractéristique associée à au moins un pixel de référence d'une région de référence de ladite image,
ladite région de référence comprenant au moins un bloc précédemment codé/décodé et/ou au moins un pixel prédit à une itération précédente,
- des moyens de sélection (12) d'au moins un pixel à prédire dans ledit bloc à coder à partir dudit au moins un paramètre de sélection ;
- pour au moins un pixel à prédire sélectionné, dit pixel d'ancrage, des moyens de prédiction (13) dudit pixel d'ancrage à partir d'au moins un pixel de référence de ladite région de référence, délivrant un pixel prédit.

15. Programme d'ordinateur comportant des instructions pour la mise en oeuvre d'un procédé selon la revendication 1 ou selon la revendication 12 lorsque ce programme est exécuté par un processeur.

## Patentansprüche

1. Verfahren zum Decodieren eines Signals, das für mindestens ein Bild repräsentativ ist,
**dadurch gekennzeichnet, dass** es mindestens eine Iteration der folgenden Schritte für mindestens einen zu decodierenden Block des Bildes umsetzt:
- Bestimmen (61) mindestens eines Auswahlparameters ausgehend von mindestens einem Merkmal, das mindestens einem Referenzpixel eines Referenzbereichs des Bildes zugeordnet wird,
wobei der Referenzbereich mindestens einen Block, der zuvor codiert/decodiert worden ist, und/oder mindestens ein Pixel, das in einer vorherigen Iteration vorhergesagt wird, aufweist,
- Auswählen (62) mindestens eines zu vorhersagenden Pixels in dem zu decodierenden Block ausgehend von dem mindestens einen Auswahlparameter,
- für mindestens ein ausgewähltes zu vorhersagendes Pixel, das Verankerungspixel genannt wird, Vorhersagen (63) des Verankerungspixels ausgehend von mindestens einem Referenzpixel des Referenzbereichs, wodurch ein vorhergesagtes Pixel ausgegeben wird.

2. Verfahren zum Decodieren nach Anspruch 1, **dadurch gekennzeichnet, dass** der mindestens eine Auswahlparameter zu der Gruppe gehört, umfassend:
- einen Vorhersageursprung, der einem Pixel des Referenzbereichs entspricht, der zum Vorhersagen des Verankerungspixels zu verwenden ist,
- eine Vorhersagerichtung für das Vorhersagen des Verankerungspixels,
- einen Vorhersageabstand für das Vorhersagen des Verankerungspixels.

3. Verfahren zum Decodieren nach Anspruch 1, **dadurch gekennzeichnet, dass** der Schritt des Bestimmens (61) die Positionen der Pixel berücksichtigt, die in mindestens einer vorherigen Iteration vorhergesagt werden.

4. Verfahren zum Decodieren nach Anspruch 1, **dadurch gekennzeichnet, dass** der Schritt des Bestimmens (61) mindestens einen Vorhersageursprung für das Vorhersagen des oder der Verankerungspixel ausgehend von den folgenden Schritten bestimmt:
- Bestimmen einer Korrelation zwischen den Pixeln von mindestens einem Paar Referenzpixel,
- Auswählen des oder der Paare, die eine Korrelation aufweisen, die größer als ein vorbestimmter Schwellenwert ist,
- Extrahieren eines Referenzpixels aus jedem der ausgewählten Paare, das dem mindestens einen Vorhersageursprung entspricht.

5. Verfahren zum Decodieren nach Anspruch 1, **dadurch gekennzeichnet, dass** der Schritt des Bestimmens (61) mindestens einen Vorhersageursprung für das Vorhersagen des oder der Verankerungspixel ausgehend von den folgenden Schritten bestimmt:
- Bestimmen eines Vorhersagerests, der mindestens einem Referenzpixel zugeordnet wird,
- Auswählen des oder der Referenzpixel, die einen Vorhersagerest aufweisen, der niedriger als oder gleich einem vorbestimmten Schwellenwert ist, der dem mindestens einen Vorhersageursprung entspricht.

6. Verfahren zum Decodieren nach Anspruch 1, **dadurch gekennzeichnet, dass** der Schritt des Bestimmens (61) mindestens eine Vorhersagerichtung für das Vorhersagen des oder der Verankerungspixel unter Berücksichtigung von mindestens einem Vorhersageursprung für das Vorhersagen des oder der Verankerungspixel bestimmt.

7. Verfahren zum Decodieren nach Anspruch 6, **dadurch gekennzeichnet, dass** der Schritt des Bestimmens (61) die folgenden Schritte umsetzt:
- Bestimmen einer Korrelation zwischen den Pixeln von mindestens einem Paar Referenzpixel, wobei ein Paar den Vorhersageursprung für das Vorhersagen des oder der Verankerungspixel und ein benachbartes Referenzpixel des Vorhersageursprungs aufweist,
- Auswählen des Paares, das eine Korrelation aufweist, die größer als ein vorbestimmter Schwellenwert ist,
- Bestimmen der Vorhersagerichtung, die dem ausgewählten Paar zugeordnet wird.

8. Verfahren zum Decodieren nach Anspruch 1, **dadurch gekennzeichnet, dass** der Schritt des Bestimmens (61) mindestens einen Vorhersageabstand für das Vorhersagen des oder der Verankerungspixel ausgehend von mindestens einem Vorhersageursprung und/oder von mindestens einer Vorhersagerichtung in Abhängigkeit von mindestens einem Vorhersagerest bestimmt, der mindestens einem Pixel zugeordnet wird, das in einer vorhergehenden Iteration ausgehend von dem mindestens einen Vorhersageursprung und/oder von der mindestens einen Vorhersagerichtung vorhergesagt wird.

9. Verfahren zum Decodieren nach Anspruch 1, **dadurch gekennzeichnet, dass** der Schritt des Bestimmens (61) mindestens einen Vorhersageabstand für das Vorhersagen des oder der Verankerungspixel ausgehend von mindestens einem Vorhersageursprung in Abhängigkeit von einem Vorhersagerest, der mindestens einem Vorhersageursprung zugeordnet wird, bestimmt.

10. Verfahren zum Decodieren nach Anspruch 1, **dadurch gekennzeichnet, dass** der Schritt des Auswählens die folgenden Unterschritte umsetzt:
- Vorauswählen mindestens eines zu vorhersagenden Pixels in dem zu decodierenden Block ausgehend von dem oder den Auswahlparametern,
- Zuordnen einer Gewichtung zu den ausgewählten zu vorhersagenden Pixeln unter Berücksichtigung des oder der Auswahlparameter, die bei dem Vorauswählen verwendet werden,
- Auswählen der ausgewählten zu vorhersagenden Pixeln, die eine Gewichtung aufweisen, die größer als ein vorbestimmter Schwellenwert ist.

11. Verfahren zum Decodieren nach Anspruch 1, **dadurch gekennzeichnet, dass** die mindestens eine Iteration einen Schritt des Aktualisierens des Referenzbereichs ausgehend von den Pixeln, die bei dem Schritt des Vorhersagens vorhergesagt werden, aufweist.

12. Verfahren zum Codieren mindestens eines Bildes, **dadurch gekennzeichnet, dass** es mindestens eine Iteration der folgenden Schritte für mindestens einen zu codierenden Block des Bildes umsetzt:
- Bestimmen (11) mindestens eines Auswahlparameters ausgehend von mindestens einem Merkmal, das mindestens einem Referenzpixel eines Referenzbereichs des Bildes zugeordnet wird,
wobei der Referenzbereich mindestens einen Block, der zuvor codiert/decodiert wird, und mindestens ein Pixel, das in einer vorherigen Iteration vorhergesagt wird, aufweist,
- Auswählen (12) mindestens eines zu vorhersagenden Pixels in dem zu codierenden Block ausgehend von dem mindestens einen Auswahlparameter,
- für mindestens ein ausgewähltes zu vorhersagendes Pixel, das Verankerungspixel genannt wird, Vorhersagen (13) des Verankerungspixels ausgehend von mindestens einem Referenzpixel des Referenzbereichs, wodurch ein vorhergesagtes Pixel ausgegeben wird.

13. Vorrichtung zum Decodieren eines Signals, das für mindestens ein Bild repräsentativ ist,
**dadurch gekennzeichnet, dass** es die folgenden Mittel aufweist, die in Form von mindestens einer Iteration für mindestens einen zu decodierenden Block des Bildes aktiviert werden:
- Mittel zum Bestimmen (61) mindestens eines Auswahlparameters ausgehend von mindestens einem Merkmal, das mindestens einem Referenzpixel eines Referenzbereichs des Bildes zugeordnet ist,
wobei der Referenzbereich mindestens einen Block, der zuvor codiert/decodiert ist, und/oder mindestens ein Pixel, das in einer vorherigen Iteration vorhergesagt ist, aufweist,
- Mittel zum Auswählen (62) mindestens eines zu vorhersagenden Pixels in dem zu decodierenden Block ausgehend von dem mindestens einen Auswahlparameter,
- für mindestens ein ausgewähltes zu vorhersagendes Pixel, das Verankerungspixel genannt wird, Mittel zum Vorhersagen (63) des Verankerungspixels ausgehend von mindestens einem Referenzpixel des Referenzbereichs, wodurch ein vorhergesagtes Pixel ausgegeben wird.

14. Vorrichtung zum Codieren mindestens eines Bildes,
**dadurch gekennzeichnet, dass** es die folgenden Mittel aufweist, die in Form von mindestens einer Iteration für mindestens einen zu codierenden Block des Bildes aktiviert werden:
- Mittel zum Bestimmen (11) mindestens eines Auswahlparameters ausgehend von mindestens einem Merkmal, das mindestens einem Referenzpixel eines Referenzbereichs des Bildes zugeordnet ist,
wobei der Referenzbereich mindestens einen Block, der zuvor codiert/decodiert ist, und/oder mindestens ein Pixel, das in einer vorherigen Iteration vorhergesagt ist, aufweist,
- Mittel zum Auswählen (12) mindestens eines zu vorhersagenden Pixels in dem zu codierenden Block ausgehend von dem mindestens einen Auswahlparameter,
- für mindestens ein ausgewähltes zu vorhersagendes Pixel, das Verankerungspixel genannt wird, Mittel zum Vorhersagen (13) des Verankerungspixels ausgehend von mindestens einem Referenzpixel des Referenzbereichs, wodurch ein vorhergesagtes Pixel ausgegeben wird.

15. Computerprogramm, das Anweisungen für das Umsetzen eines Verfahrens nach Anspruch 1 oder nach Anspruch 12 aufweist, wenn dieses Programm von einem Prozessor ausgeführt wird.

## Claims

1. Method for decoding a signal representative of at least one image,
**characterized in that** it implements at least one iteration of the following steps, for at least one block to be decoded of said image:
- determination (61) of at least one selection parameter, on the basis of at least one characteristic associated with at least one reference pixel of a reference region of said image,
said reference region comprising at least one previously coded/decoded block and/or at least one pixel predicted at a previous iteration,
- selection (62) of at least one pixel to be predicted in said block to be decoded, on the basis of said at least one selection parameter;
- for at least one selected pixel to be predicted, termed the anchor pixel, prediction (63) of said anchor pixel on the basis of at least one reference pixel of said reference region, delivering a predicted pixel.

2. Decoding method according to Claim 1, **characterized in that** said at least one selection parameter belongs to the group comprising:
- a prediction origin, corresponding to a pixel of said reference region to be used for the prediction of said anchor pixel;
- a prediction direction for the prediction of said anchor pixel;
- a prediction distance for the prediction of said anchor pixel.

3. Decoding method according to Claim 1, **characterized in that** said determination step (61) takes account of the positions of the predicted pixels at at least one previous iteration.

4. Decoding method according to Claim 1, **characterized in that** said determination step (61) determines at least one prediction origin for the prediction of said anchor pixel or pixels, on the basis of the following steps:
- determination of a correlation between the pixels of at least one pair of reference pixels;
- selection of the pair or pairs exhibiting a correlation greater than a predetermined threshold;
- extraction of a reference pixel of each of the pairs selected, corresponding to said at least one prediction origin.

5. Decoding method according to Claim 1, **characterized in that** said determination step (61) determines at least one prediction origin for the prediction of said anchor pixel or pixels, on the basis of the following steps:
- determination of a prediction residual associated with at least one reference pixel;
- selection of said reference pixel or pixels exhibiting a prediction residual less than or equal to a predetermined threshold, corresponding to said at least one prediction origin.

6. Decoding method according to Claim 1, **characterized in that** said determination step (61) determines at least one prediction direction for the prediction of said anchor pixel or pixels by taking account of at least one prediction origin for the prediction of said anchor pixel or pixels.

7. Decoding method according to Claim 6, **characterized in that** said determination step (61) implements the following steps:
- determination of a correlation between the pixels of at least one pair of reference pixels, a pair comprising said prediction origin for the prediction of said anchor pixel or pixels and a reference pixel neighbouring said prediction origin;
- selection of the pair exhibiting a correlation greater than a predetermined threshold;
- determination of the prediction direction associated with said selected pair.

8. Decoding method according to Claim 1, **characterized in that** said determination step (61) determines at least one prediction distance for the prediction of said anchor pixel or pixels on the basis of at least one prediction origin and/or of at least one prediction direction, as a function of at least one prediction residual associated with at least one pixel predicted at a previous iteration on the basis of said at least one prediction origin and/or of said at least one prediction direction.

9. Decoding method according to Claim 1, **characterized in that** said determination step (61) determines at least one prediction distance for the prediction of said anchor pixel or pixels on the basis of at least one prediction origin, as a function of a prediction residual associated with said at least one prediction origin.

10. Decoding method according to Claim 1, **characterized in that** said selection step implements the following sub-steps:
- preselection of at least one pixel to be predicted in said block to be decoded, on the basis of said selection parameter or parameters;
- assignment of a weight to the preselected pixels to be predicted, taking account of said selection parameter or parameters used during said preselection;
- selection of the preselected pixels to be predicted exhibiting a weight greater than a predetermined threshold.

11. Decoding method according to Claim 1, **characterized in that** said at least one iteration comprises a step of updating said reference region on the basis of the pixels predicted during said prediction step.

12. Method for coding at least one image, **characterized in that** it implements at least one iteration of the following steps, for at least one block to be coded of said image:
- determination (11) of at least one selection parameter, on the basis of at least one characteristic associated with at least one reference pixel of a reference region of said image,
said reference region comprising at least one previously coded/decoded block and/or at least one pixel predicted at a previous iteration,
- selection (12) of at least one pixel to be predicted in said block to be coded, on the basis of said at least one selection parameter;
- for at least one selected pixel to be predicted, termed the anchor pixel, prediction (13) of said anchor pixel on the basis of at least one reference pixel of said reference region, delivering a predicted pixel.

13. Device for decoding a signal representative of at least one image,
**characterized in that** it comprises the following means, activated in the form of at least one iteration for at least one block to be decoded of said image:
- means (61) for determining at least one selection parameter, on the basis of at least one characteristic associated with at least one reference pixel of a reference region of said image,
said reference region comprising at least one previously coded/decoded block and/or at least one pixel predicted at a previous iteration,
- means (62) for selecting at least one pixel to be predicted in said block to be decoded, on the basis of said at least one selection parameter;
- for at least one selected pixel to be predicted, termed the anchor pixel, means (63) for predicting said anchor pixel on the basis of at least one reference pixel of said reference region, delivering a predicted pixel.

14. Device for coding at least one image, **characterized in that** it comprises the following means, activated in the form of at least one iteration for at least one block to be coded of said image:
- means (11) for determining at least one selection parameter, on the basis of at least one characteristic associated with at least one reference pixel of a reference region of said image,
said reference region comprising at least one previously coded/decoded block and/or at least one pixel predicted at a previous iteration,
- means (12) for selecting at least one pixel to be predicted in said block to be coded on the basis of said at least one selection parameter;
- for at least one selected pixel to be predicted, termed the anchor pixel, means (13) for predicting said anchor pixel on the basis of at least one reference pixel of said reference region, delivering a predicted pixel.

15. Computer program comprising instructions for the implementation of a method according to Claim 1 or according to Claim 12 when this program is executed by a processor.
